# EUROPÄISCHE PATENTSCHRIFT

(11) **EP 2 157 009 B1**
(45) Veröffentlichungstag und Bekanntmachung des Hinweises auf die Patenterteilung: **24.04.2013**
(21) Anmeldenummer: 09167941.5
(22) Anmeldetag: 14.08.2009
(51) Int. Cl.: B62J 6/02

(54) **Fahrradscheinwerfer mit Nahfeldausleuchtung und entsprechendes Fahrrad**
Bicycle headlamp with near field illumination and corresponding bicycle
Phare de vélo doté d'un éclairage de proximité et vélo correspondant

(30) Priorität: 18.08.2008 DE 102008038136
(43) Veröffentlichungstag der Anmeldung: 24.02.2010
(73) Patentinhaber: Busch & Müller KG, 58540 Meinerzhagen (DE)
(72) Erfinder: Müller, Guido, 58540 Meinerzhagen (DE)
(74) Vertreter: Heine, Christian Klaus

(56) Entgegenhaltungen:
- FR-A- 2 018 799
- US-A- 2 578 962

## Beschreibung

Gegenstand der vorliegenden Erfindung ist ein Fahrradscheinwerfer und ein entsprechendes Fahrrad.

Fahrradscheinwerfer werden an Fahrrädern eingesetzt, um eine Beleuchtung des Vorfeldes des Fahrrades zu gewährleisten und gleichzeitig die Sichtbarkeit des Fahrrades für andere Verkehrsteilnehmer sicherzustellen. Gesetzliche Vorschriften wie beispielsweise in Deutschland die StVZO verlangen gewisse Beleuchtungsstärken in bestimmten Winkelbereichen. Nichtsdestotrotz sichern diese gesetzlichen Vorschriften nur Mindeststandards ab.

Von daher liegt der vorliegenden Erfindung die Aufgabe zugrunde, hiervon ausgehend einen Fahrradscheinwerfer und ein Fahrrad mit weiteren Verbesserungen der Sicherheit eines Fahrradfahrers vorzuschlagen.

Diese Aufgabe wird gelöst durch einen Fahrradscheinwerfer und ein Fahrrad mit den Merkmalen der jeweiligen unabhängigen Ansprüche. Abhängige Ansprüche sind auf vorteilhafte Weiterbildungen gerichtet.

Der erfindungsgemäße Fahrradscheinwerfer umfasst eine Lichtquelle und einen von der Lichtquelle bestrahlbaren Reflektor. Das von dem Reflektor reflektierte Licht bildet einen Lichtkegel, der eine horizontale Bezugsebene aufweist, die in einem Bereich vertikal größter Lichtintensität liegt. Bekannt sind Scheinwerfer aus dem Dokumenten US 2,578,962, FR 2,018,799 und EP 1 228 953, wobei der Reflektor a symmetrisch ausgebildet ist. Erfindungsgemäß ist der Reflektor so geformt, dass die Breite des Lichtkegels bis zu einem Bereich von mindestens 15° unterhalb der horizontalen Bezugsebene konstant bleibt.

Unter dem Lichtkegel wird insbesondere der Bereich verstanden, der von dem erfindungsgemäßen Fahrradscheinwerfer ausgeleuchtet wird.

Unter konstant wird verstanden, dass eine Breite des Lichtkegels definiert werden kann, die zumindest gleich bleibt und sich ggf. leicht nach unten zu negativen Winkelwerten, also unterhalb der horizontalen Bezugsebene, hin vergrößert, jedoch nicht kleiner wird.

Der erfindungsgemäße Fahrradscheinwerfer hat den Vorteil, dass durch die Lichtintensität in einem Bereich bis zu mindestens 15° unterhalb der horizontalen Bezugsebene eine Ausleuchtung des Nahfeldes vor dem Fahrrad erreicht wird, wobei gleichzeitig die gesetzlichen Vorgaben der Beleuchtungsstärke und Lichtstärke des Fahrradscheinwerfers erfüllt werden können.

Gemäß einer vorteilhaften Ausgestaltung des erfindungsgemäßen Fahrradscheinwerfers weist der Reflektor einen Nahfeldbereich auf, mit dem ein Teil der Strahlung der Lichtquelle in einem Bereich von 12° und mehr, bevorzugt bis zu 15° und mehr, unterhalb der horizontalen Bezugslinie reflektiert werden kann.

Dieser Nahfeldbereich des Reflektors gewährleistet damit die Ausleuchtung des Nahfeldes vor dem Fahrrad. Grundsätzlich kann durch eine Ausleuchtung des Nahfeldes vor dem Fahrrad dem Fahrradfahrer das Erkennen von Hindernissen wie beispielsweise Scherben, Kies, Kleintieren oder ähnlichem kurz vor dem Fahrrad erleichtert werden, so dass ihm noch eine Reaktion auf das Hindernis wie beispielsweise Lenkvorgang oder ein Bremsvorgang möglich ist. Hierdurch wird die Sicherheit des Fahrradfahrers deutlich erhöht. Insbesondere und alternativ oder zusätzlich zu dem Bereich unterhalb der horizontalen Bezugsebene, in dem die Breite des Lichtkegels konstant bleibt, ist der Reflektor bevorzugt geeignet und bestimmt, das Nahfeld vor einem Fahrrad auszuleuchten.

Gemäß einer weiteren vorteilhaften Ausgestaltung des erfindungsgemäßen Fahrradscheinwerfers weist die Lichtquelle eine Hauptabstrahlrichtung auf, wobei der Reflektor an einem Querschnitt einen Winkelbereich von mindestens 100° bezogen auf die Hauptabstrahlrichtung abdeckt.

Bevorzugt ist sogar ein Winkelbereich von 105° und mehr, insbesondere sogar von 110°. Die Ausgestaltung des Reflektors zur Abdeckung eines Winkelbereichs von mehr als 100° ermöglicht eine Ausgestaltung des Reflektors so, dass auch das Nahfeld vor dem Fahrrad in vorteilhafter Weise beleuchtet werden kann.

Gemäß einer weiteren vorteilhaften Ausgestaltung umfasst die Lichtquelle mindestens eine Leuchtdiode.

Weiterhin bevorzugt ist eine Ausgestaltung, bei der genau eine Leuchtdiode als Lichtquelle des erfindungsgemäßen Fahrradscheinwerfers dient.

Gemäß einer weiteren vorteilhaften Ausgestaltung des erfindungsgemäßen Fahrradscheinwerfers ist der Reflektor so geformt, dass die Beleuchtungsstärke in dem Lichtkegel in einem Bereich von 10° unterhalb der horizontalen Bezugsebene bis zumindest 15°, bevorzugt bis zumindest 20° unter der horizontalen Bezugsebene zumindest 0,1 Lux in einer Entfernung von 10 Metern beträgt. Bevorzugt beträgt die Beleuchtungsintensität sogar zumindest 0,2 Lux oder sogar 0,5 Lux.

Diese Lichtintensität bewirkt eine gute Ausleuchtung des Nahfeldbereichs von 1 bis 4 Metern vor dem Fahrradscheinwerfer. Aufgrund der kurzen Distanz zwischen Fahrradscheinwerfer und beleuchteter Fläche im Nahfeldbereich werden relativ hohe Beleuchtungsstärken von bis zu 10 Lux, bevorzugt sogar von bis zu 40 Lux erreicht. Hierdurch kann der Fahrradfahrer erkennen, was sich kurz vor seinem Fahrrad abspielt.

Gemäß einer weiteren vorteilhaften Ausgestaltung des erfindungsgemäßen Fahrradscheinwerfers weist die Lichtquelle eine Hauptabstrahlrichtung auf, die einen Winkel von mehr als 90° mit der horizontalen Bezugsebene einschließt.

Insbesondere hierbei umfasst die Lichtquelle mindestens eine Leuchtdiode, bevorzugt eine Leuchtdiode. Ein Winkel von mehr als 90° zur horizontalen Bezugsebene bedeutet insbesondere, dass die Lichtquelle im Wesentlichen entgegengesetzt zum Lichtkegel in den Reflektor einstrahlt. Das ermöglicht Ausgestaltungen des Fahrradscheinwerfers, in denen die Lichtquelle beim Einblick in den Fahrradscheinwerfer nicht unmittelbar sichtbar ist. So kann zum Beispiel in besonders einfacher Weise ein Teil des Reflektors als Nahfeldbereich ausgebildet werden, in dem der Winkel zwischen Hauptabstrahlrichtung und horizontaler Bezugsebene so angepasst wird, dass beispielsweise ein Randbereich des Reflektors zur Ausleuchtung in kurzen Entfernungen eingesetzt wird. Weiterhin ermöglicht ein Winkel von mehr als 90° zwischen Hauptabstrahlrichtung und horizontaler Bezugsebene, dass der Bereich der Lichtquelle, der entgegengesetzt vom Reflektor liegt, für weitere Funktionen genutzt werden kann. Beispielsweise kann hier ein Rückstrahler ausgebildet werden, da dieser Bereich nicht im Austrittsbereich des Lichtkegels liegt. So können besonders kompakte Fahrradscheinwerfer ausgebildet werden, die trotzdem gesetzliche Bestimmungen im Hinblick auf Rückstrahler erfüllen und die kompakt und leicht gebaut werden können.

Weiterhin wird ein Fahrrad umfassend einen Fahrradscheinwerfer gemäß der vorliegenden Erfindung vorgeschlagen.

Ein solches Fahrrad hat für den Fahrer den Vorteil, dass es das Erkennen von Hindernissen beispielsweise auch Tieren oder ähnlichem im Nahfeldbereich, das heißt insbesondere in einem Bereich von 1 bis 4 m vor dem Fahrrad, ermöglicht.

Gemäß einer vorteilhaften Ausgestaltung des erfindungsgemäßen Fahrrades ist der Fahrradscheinwerfer so angeordnet, dass im Bereich größter Lichtintensität auf der horizontalen Bezugsebene in einem Abstand von 10 m von dem Fahrradscheinwerfer eine Beleuchtungsstärke von mehr als 7 Lux, bevorzugt mehr als 10 Lux vorliegt, wobei in einem Bereich von 1 bis 4 m vor dem Fahrradscheinwerfer eine Beleuchtungsstärke von bis zu 10 Lux vorliegt. Insbesondere beträgt die Beleuchtungsstärke hier mehr als 3 Lux, bevorzugt mehr als 5 Lux.

Gemäß einer weiteren vorteilhaften Ausgestaltung des erfindungsgemäßen Fahrrades ist der Fahrradscheinwerfer so angeordnet, dass in einem Bereich von 1 bis 4 m vor dem Fahrradscheinwerfer eine Beleuchtungsstärke von bis zu 40 Lux vorliegt. Insbesondere beträgt die Beleuchtungsstärke hier mehr als 3 Lux, bevorzugt mehr als 5 Lux.

Die für den erfindungsgemäßen Fahrradscheinwerfer offenbarten Details und Vorteile lassen sich auf das erfindungsgemäße Fahrrad übertragen und umgekehrt. Im Folgenden wir die Erfindung anhand der beigefügten Figuren näher erläutert, ohne auf die dort gezeigten Details und Ausführungsbeispiele beschränkt zu sein. Es zeigen schematisch:
- Figur 1:: einen Fahrradscheinwerfer, wie er aus dem Stand der Technik bekannt ist;
- Figur 2:: das Beleuchtungsbild eines aus dem Stand der Technik bekannten Fahrradscheinwerfers;
- Figur 3:: einen Fahrradscheinwerfer gemäß der vorliegenden Erfindung;
- Figur 4:: das Beleuchtungsbild eines Fahrradscheinwerfers nach der vorliegenden Erfindung;
- Figur 5:: einen aus dem Stand der Technik bekannten Fahrradscheinwerfer im Querschnitt im Detail; und
- Figur 6:: einen erfindungsgemäßen Fahrradscheinwerfer im Querschnitt im Detail.

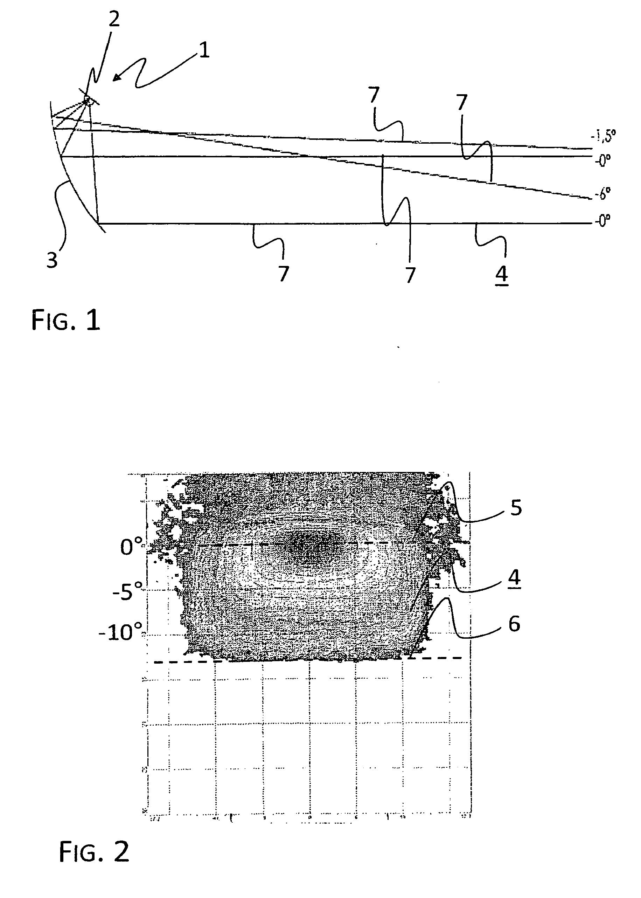

Figur 1 zeigt schematisch einen Fahrradscheinwerfer 1, wie er aus dem Stand der Technik bekannt ist. Der Fahrradscheinwerfer 1 umfasst eine Lichtquelle 2 und einen Reflektor 3, der von der Lichtquelle 2 bestrahlt wird. Das von dem Reflektor 3 reflektierte Licht bildet einen Lichtkegel 4. Der Lichtkegel 4, der aus Lichtstrahlen 7 gebildet wird, weist eine horizontale Bezugsebene 5 auf. Diese liegt in einem Bereich vertikal größter Lichtintensität. Bei dem aus dem Stand der Technik bekannten Fahrradscheinwerfer 1 ist der Reflektor 3 so gebildet, dass ein vertikaler Bereich von mindestens 3° oberhalb der horizontalen Bezugsebene bis zu mindestens 10° unterhalb der horizontalen Bezugsebene ausgeleuchtet wird. Der entsprechende Lichtkegel 2 beim Auftreffen auf eine Bezugsfläche ist in Figur 2 gezeigt.

Die horizontale Bezugsebene 5 liegt im Bereich vertikal größter Lichtintensität. Die Lichtintensität ist in Figur 2 als Schattierung gezeigt, je dunkler diese ist, desto intensiver ist die Lichtintensität.

Figur 2 zeigt schematisch die Beleuchtungsstärke des Lichtkegels 4 in einer Entfernung von 10 m, der relativ klar begrenzt ist. In einem horizontalen Bezugssystem, bei welchem 0° der horizontalen Bezugsebene 5 entspricht, deckt der Lichtkegel 4 einen Bereich von etwa +3° bis -13° ab. Der Lichtkegel 4 ist durch einen unteren Grenzbereich 6 begrenzt. Oberhalb von etwa +3° in diesem Bezugssystem herrscht Streulicht vor.

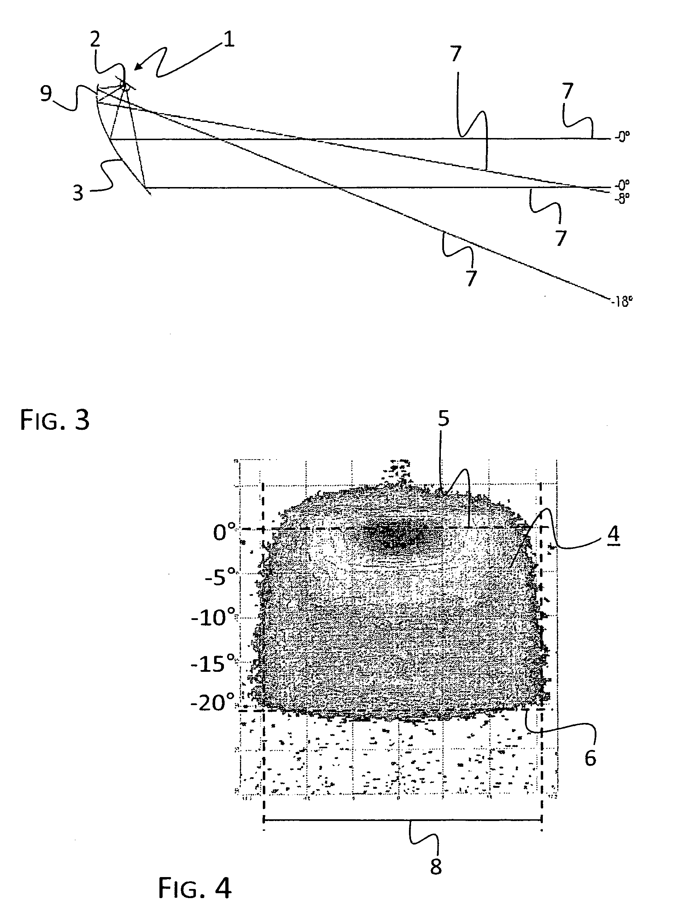

Im Vergleich dazu zeigen Figuren 3 und 4 die Situation bei einem erfindungsgemäßen Fahrradscheinwerfer 1. Die den Lichtkegel 4 bildenden Lichtstrahlen 7 werden durch den erfindungsgemäßen Reflektor 3 deutlich weiter nach unten reflektiert und zwar in Bereichen bis zu -18° und tiefer im Vergleich zu dem aus dem Stand der Technik bekannten Fahrradscheinwerfer 1.

Figur 4 zeigt schematisch den Lichtkegel 4 des erfindungsgemäßen Fahrradscheinwerfers 1. Der Lichtkegel 4 erstreckt sich bei im Wesentlichen konstanter Breite 8 über einen Winkelbereich von etwa +4° bis etwa -20°. Dadurch wird erreicht, dass bei der Montage an einem Fahrrad auch der Nahfeldbereich des Fahrrades ausgeleuchtet wird. Hierbei handelt es sich um einen Bereich von 1 bis 4 m vor dem Fahrrad, der bei aus dem Stand der Technik bekannten Scheinwerfern nicht oder nur durch Streulicht ausgeleuchtet wird. Der erfindungsgemäße Fahrradscheinwerfer mit dem entsprechenden Reflektor 3 vergrößert so die Sicherheit des Fahrradfahrers, indem dieser beim Fahren auch beispielsweise Hindernisse und die Oberflächenbeschaffenheit des Untergrundes direkt vor dem Fahrrad sieht.

Dies wird insbesondere dadurch erreicht, dass der Reflektor 3 eines erfindungsgemäßen Fahrradscheinwerfers 1 im Vergleich zu einem Reflektor 3 eines aus dem Stand der Technik bekannten Fahrradscheinwerfers 1 - wie in Figur 1 gezeigt - einen Nahfeldbereich 9 aufweist. Dieser ist im oberen Bereich des Reflektors 3 ausgebildet und bewirkt eine Reflektion der die Lichtquelle 2 verlassenden Lichtstrahlen 7 in einen Bereich, mit dem der Lichtkegel 4 auch das Nahfeld vor dem Fahrrad ausleuchten kann.

Die Lichtquelle 2 umfasst mindestens eine Leuchtdiode und stellt bevorzugt genau eine Hochleistungsleuchtdiode dar.

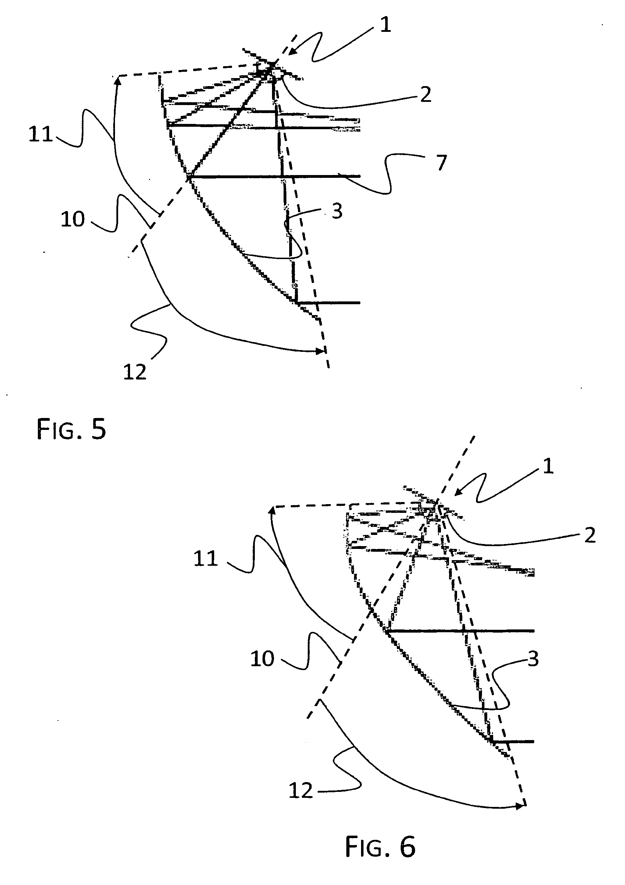

Figur 5 zeigt schematisch einen Querschnitt durch einen aus dem Stand der Technik bekannten Fahrradscheinwerfer 1 mit einem Reflektor 3 und einer Lichtquelle 2. Die Lichtquelle 2 weist eine Hauptabstrahlrichtung 10 auf. Bezogen auf diese Hauptabstrahlrichtung 10 weist der Reflektor 3 des Fahrradscheinwerfers 1 aus dem Stand der Technik einen ersten Grenzwinkel 11 auf. Nach unten wird der Reflektor 3 durch den zweiten Grenzwinkel 12 begrenzt.

Im Vergleich dazu zeigt Figur 6 schematisch einen Querschnitt durch einen erfindungsgemäßen Fahrradscheinwerfer1 mit einem entsprechenden Reflektor 3. Die Lichtquelle 2 weist eine leicht andere Ausrichtung zum Reflektor 3 auf als bei aus dem Stand der Technik bekannten Fahrradscheinwerfern 1. Auch diese Lichtquelle weist eine Hauptabstrahlrichtung 10 auf. Diese schließt mit der horizontalen Bezugsebene, die in Ihrer Lage dem hier gezeigten Lichtstrahl 7 entspricht, einen Winkel von mehr als 90° ein. Der Reflektor wird durch den ersten Grenzwinkel 11 und den zweiten Grenzwinkel 12 begrenzt. Insbesondere der erste Grenzwinkel 11 ist betragsmäßig größer als der erste Grenzwinkel 11 bei einem Fahrradscheinwerfer 1 nach dem Stand der Technik. Dieser längere obere Bereich stellt den Nahfeldbereich 9 dar. Die Betragssumme des ersten Grenzwinkels 11 und des zweiten Grenzwinkels 12 beträgt bei einem Fahrradscheinwerfer 1 nach der vorliegenden Erfindung bevorzugt mindestens 100°, hier sogar etwa 110°.

Der erfindungsgemäße Fahrradscheinwerfer 1 erlaubt die Ausleuchtung des Nahfeldbereiches direkt vor dem Fahrrad, insbesondere in einem Bereich von 1 bis 4 Metern vor dem Fahrrad bei gleichzeitiger Erfüllung der gesetzlichen Anforderungen an die Eigenschaften eines Fahrradscheinwerfers. So wird die Sicherheit des Fahrradfahrers verbessert.

### Bezugszeichenliste

- 1: Fahrradscheinwerfer
- 2: Lichtquelle
- 3: Reflektor
- 4: Lichtkegel
- 5: horizontale Bezugsebene
- 6: unterer Grenzbereich
- 7: Lichtstrahl
- 8: Breite
- 9: Nahfeldbereich
- 10: Hauptabstrahlrichtung
- 11: erster Grenzwinkel
- 12: zweiter Grenzwinkel

## Patentansprüche

1. Fahrradscheinwerfer (1), umfassend eine Lichtquelle (2) und einen von der Lichtquelle (2) bestrahlbaren Reflektor (3), wobei das von dem Reflektor (3) reflektierte Licht einen Lichtkegel (4) bildet, der eine horizontale Bezugsebene (5) aufweist, die in einem Bereich vertikal größter Lichtintensität liegt, **dadurch gekennzeichnet, dass** der Reflektor (3) so geformt ist, dass die Breite des Lichtkegels (4) bis zu einem Bereich von mindestens 15° unterhalb der horizontalen Bezugsebene (5) konstant bleibt.

2. Fahrradscheinwerfer (1) nach Anspruch 1, bei dem der Reflektor (3) einen Nahfeldbereich (9) aufweist, mit dem ein Teil der Strahlung der Lichtquelle (2) in einen Bereich von 12° und mehr, bevorzugt bis zu 15° und mehr unterhalb der horizontalen Bezugsebene (5) reflektiert werden kann.

3. Fahrradscheinwerfer (1) nach einem der vorhergehenden Ansprüche, bei dem die Lichtquelle (2) eine Hauptabstrahlrichtung (10) aufweist und der Reflektor (3) in einem Querschnitt einen Winkelbereich von mindestens 100° bezogen auf die Hauptabstrahlrichtung (10) abdeckt.

4. Fahrradscheinwerfer (1) nach einem der vorhergehenden Ansprüche, bei dem die Lichtquelle (2) mindestens eine Leuchtdiode umfasst.

5. Fahrradscheinwerfer (1) nach einem der vorhergehenden Ansprüche, bei dem der Reflektor (3) so geformt ist, dass die Beleuchtungsstärke in dem Lichtkegel (4) in einem Bereich von 10° unterhalb der horizontalen Bezugsebene bis zumindest 15° unter der horizontalen Bezugsebene zumindest 0,1 Lux in einer Entfernung von 10 Metern beträgt.

6. Fahrradscheinwerfer (7) nach einem der vorhergehenden Ansprüche, bei dem die Lichtquelle (2) eine Hauptabstrahlrichtung (10) aufweist, die einen Winkel von mehr als 90° mit der horizontalen Bezugsebene (5) einschließt.

7. Fahrrad, umfassend einen Fahrradscheinwerfer (1) nach einem der vorhergehenden Ansprüche.

8. Fahrrad nach Anspruch 7, bei dem der Fahrradscheinwerfer (1) so angeordnet ist, dass im Bereich größter Lichtintensität auf der horizontalen Bezugsebene (5) in einem Abstand von 10 m (Metern) von dem Fahrradscheinwerfer (1) eine Beleuchtungsstärke von mehr als 7 Lux, bevorzugt mehr als 10 Lux vorliegt, wobei in einem Bereich von 1 bis 4 Metern vor dem Fahrradscheinwerfer (1) eine Beleuchtungsstärke von bis zu 10 Lux vorliegt.

9. Fahrrad nach Anspruch 8, bei dem der Fahrradscheinwerfer (1) so angeordnet ist, dass in einem Bereich von 1 bis 4 Metern vor dem Fahrradscheinwerfer (1) eine Beleuchtungsstärke von bis zu 40 Lux vorliegt.

## Claims

1. Bicycle headlight (1), comprising a light source (2) and a reflector (3) which can be irradiated by the light source (2), the light reflected by the reflector (3) forming a light cone (4) which comprises a horizontal reference plane (5) which is in a range of the vertically highest light intensity, **characterised in that** the reflector (3) is formed such that the width of the light cone (4) remains constant up to a range of at least 15° below the horizontal reference plane (5).

2. Bicycle headlight (1) according to claim 1, in which the reflector (3) has a near-field range (a), by means of which reflector part of the radiation from the light source (2) can be reflected in a range of 12° and above, preferably up to 15° and above, below the horizontal reference plane (5).

3. Bicycle headlight (1) according to any of the preceding claims, in which the light source (2) has a main beam direction (10) and, in cross-section, the reflector (3) covers an angular range of at least 100° based on the main beam direction (10).

4. Bicycle headlight (1) according to any of the preceding claims, in which the light source (2) includes at least one light-emitting diode.

5. Bicycle headlight (1) according to any of the preceding claims, in which the reflector (3) is formed such that the illuminance in the light cone (4) in a range of from 10° below the horizontal reference plane to at least 15° below the reference plane is at least 0.1 lux at a distance of 10 metres.

6. Bicycle headlight (7) according to any of the preceding claims, in which the light source (2) has a main beam direction (10) which encloses an angle of greater than 90° together with the horizontal reference plane (5).

7. Bicycle, comprising a bicycle headlight (1) according to any of the preceding claims.

8. Bicycle according to claim 7, in which the bicycle headlight (1) is arranged such that there is an illuminance of greater than 7 lux, preferably greater than 10 lux, in the range of highest light intensity on the horizontal reference plane (5) at a distance of 10 m (metres) from the bicycle headlight (1), there being an illuminance of up to 10 lux in a range of from 1 to 4 metres in front of the bicycle headlight (1).

9. Bicycle according to claim 8, in which the bicycle headlight (1) is arranged such that there is an illuminance of up to 40 lux in a range of from 1 to 4 metres in front of the bicycle headlight (1).

## Revendications

1. Phare de vélo (1), comprenant une source lumineuse (2) et un réflecteur (3) pouvant être éclairé par la source lumineuse (2), la lumière réfléchie par le réflecteur (3) formant un cône lumineux (4) qui présente un plan de référence (5) horizontal qui est situé dans une zone d'intensité lumineuse la plus forte verticalement, **caractérisé en ce que** le réflecteur (3) est formé de telle façon que la largeur du cône lumineux (4) demeure constante jusqu'à une zone d'au moins 15° au-dessous du plan de référence (5) horizontal.

2. Phare de vélo (1) selon la revendication 1, dans lequel le réflecteur (3) présente une zone de champ proche (9) avec laquelle une partie du rayonnement de la source lumineuse (2) peut être réfléchie dans une zone de 12° et plus, de préférence jusqu'à 15° ou plus, au-dessous du plan de référence (5) horizontal.

3. Phare de vélo (1) selon une des revendications précédentes, dans lequel la source lumineuse (2) présente une direction de rayonnement principale (10), et dans lequel le réflecteur (3) couvre, dans une section transversale, une plage angulaire d'au moins 100° par rapport à la direction de rayonnement principale (10).

4. Phare de vélo (1) selon une des revendications précédentes, dans lequel la source lumineuse (2) comprend au moins une diode lumineuse.

5. Phare de vélo (1) selon une des revendications précédentes, dans lequel le réflecteur (3) est formé de telle sorte que l'éclairement lumineux dans le cône lumineux (4), dans une zone de 10° au-dessous du plan de référence horizontal jusqu'à au moins 15° sous le plan de référence horizontal, est au moins égal à 0,1 lux à une distance de 10 mètres.

6. Phare de vélo (7) selon une des revendications précédentes, dans lequel la source lumineuse (2) présente une direction de rayonnement principale (10) qui forme un angle de plus de 90° avec le plan de référence (5) horizontal.

7. Vélo, comprenant un phare de vélo (1) selon une des revendications précédentes.

8. Vélo selon la revendication 7, dans lequel le phare de vélo (1) est disposé de telle sorte que, dans la zone d'intensité lumineuse maximale sur le plan de référence (5) horizontal, à une distance de 10 m (mètres) du phare de vélo (1), l'éclairement lumineux est supérieur à 7 lux, de préférence supérieur à 10 lux, un éclairement lumineux allant jusqu'à 10 lux étant constaté dans une zone de 1 à 4 mètres devant le phare de vélo (1).

9. Vélo selon la revendication 8, dans lequel le phare de vélo (1) est disposé de telle sorte que, dans une zone de 1 à 4 mètres devant le phare de vélo (1), il y a un éclairement lumineux allant jusqu'à 40 lux.
